# EUROPÄISCHE PATENTSCHRIFT

(11) **EP 1 729 114 B1**
(45) Veröffentlichungstag und Bekanntmachung des Hinweises auf die Patenterteilung: **11.03.2009**
(21) Anmeldenummer: 06011009.5
(22) Anmeldetag: 29.05.2006
(51) Int. Cl.: G01N 21/64

(54) **Verfahren zur Bestimmung von irreversiblen Strahlenschäden von optischem Material**
Method of determining the irreversible radiation damages of optical material
Procédé pour détecter des dommages iirréversibles dans des matériaux optiques causés par un rayonnement

(30) Priorität: 30.05.2005 DE 102005024678
(43) Veröffentlichungstag der Anmeldung: 06.12.2006
(73) Patentinhaber: Schott AG, 55122 Mainz (DE)
(72) Erfinder: Von der Gönna, Gordon, Dr., 07743 Jena (DE); Pöhl, Karin, Dr., 07613 Heideland (DE); Martin, Regina, 07745 Jena (DE); Parthier, Lutz, Dr., 14532 Kleinmachnow (DE)
(74) Vertreter: Fuchs

(56) Entgegenhaltungen:
- JP-A- 2001 041 876
- US-B2- 6 486 949
- US-B2- 6 838 681
- TRIEBEL W ET AL: "Evaluation of fused silica for DUV laser applications by short-time diagnostics" PROCEEDINGS OF THE SPIE, SPIE, BELLINGHAM, VA, US, Bd. 4103, 2000, Seiten 1-11, XP002300940 ISSN: 0277-786X

## Beschreibung

Die Erfindung betrifft ein Verfahren zur Bestimmung der Langzeitstabilität der Transmission von kristallinem optischem Material bei Bestrahlung mit hoher Energiedichte, ein mit diesem Verfahren erhaltenes Material sowie dessen Verwendung.

Bei der Herstellung von elektronischen Rechenbauteilen wie Computerchips sowie anderer integrierter Schaltkreise werden mittels optischer Lithographie die Strukturen solcher Schaltkreise von einer Photomaske auf einen mit einem Photolack versehenen Träger einen sog. Wafer abgebildet und durch diese Belichtung Schaltkreise bzw. ganze Schaltanordnungen erzeugt. Da der Bedarf an immer leistungsfähigeren Rechnern steigt, nimmt auch der Bedarf an immer kleineren Schaltanordnungen zu. Dabei müssen notwendigerweise auch die jeweiligen Schaltkreisstrukturen immer schärfer abgebildet werden, was dazu führt, immer kleinere Wellenlängen zur Belichtung des Photolackes zu verwenden. Derartige kleine Wellenlängen weisen jedoch eine hohe Energie auf.

Es ist nun auch bekannt, dass Materialien für optische Elemente eine sie durchdringende Strahlung mehr oder weniger absorbieren so dass die Intensität der Strahlung nach Durchtritt durch ein solches Material regelmäßig geringer ist als bei seinem Eintritt. Darüber hinaus treten beim Eintritt der Strahlung in das optische Material an dessen Oberfläche zusätzlich Absorption und Streueffekte auf die ebenfalls zur Verringerung der Durchlässigkeit bzw. Transmission führen. Dabei ist es auch bekannt, dass das Ausmaß dieser Absorption üblicherweise nicht nur von der Wellenlänge der Strahlung abhängt, sondern auch von der Energiedichte bzw. der Fluenz. Da bei der Belichtung solcher kleiner Chipstrukturen oder solcher kleiner Schaltkreise der Laufweg eines Lichtstrahles durch das gesamte optische Material in einem Objektiv ohne weiteres länger als ein Meter sein kann, stellt die Absorption ein großes Problem dar. Es wird daher für solche optisch transparenten Linsensysteme angestrebt, die Absorption so gering wie nur möglich zu halten, d.h., dass diese Systeme bzw. deren Elemente zumindest für die jeweilige Arbeitswellenlänge eine hohe Durchlässigkeit bzw. Transmission aufweisen sollen. Dabei ist auch bekannt, dass sich die Absorption aus materialspezifischen (intrinsischen) Anteilen und solchen Anteilen zusammensetzt, die durch sog. nichtintrinsische Anteile, wie z.B. Einschlüsse, Verunreinigungen und/oder Kristallfehler hervorgerufen werden. Während die intrinsische Absorption eine Materialkonstante darstellt, die von der jeweiligen Qualität des Materials unabhängig ist und sich daher auch nicht verringern lässt, ist die zusätzliche nichtintrinsische Absorption von der Güte des Materials, d.h. den zuvor genannten Verunreinigungen, Kristallfehlern etc. abhängig und daher zumindest theoretisch vermeidbar. Sie führt zu einem Qualitätsverlust des optischen Materials und damit des Systems.

Sowohl durch die intrinsische als auch durch die nicht-intrinsische Absorption wird Energie im optischen Material deponiert, was zu seiner Erwärmung führt. Eine derartige Erwärmung des Materials hat zum Nachteil, dass sich optische Eigenschaften, wie z. B. der Brechungsindex ändern, da die Brechzahl nicht nur von der Wellenlänge des Lichtes sondern auch von der Temperatur des optischen Materials abhängt, was in einem zur Strahlformung verwendeten optischen Bauteil zu einer Änderung der Abbildungsverhältnisse führt. Darüber hinaus führt eine Erwärmung in einem optischen Bauteil auch zu einer thermischen Ausdehnung und damit zu einer Änderung der Linsengeometrie. Diese Phänomene erzeugen eine Änderung des Linsenbrennpunktes, bzw. eine Unschärfe bei mit der erwärmten Linse projektierten Abbildungen. In der Photolithographie, wie sie zur Herstellung von Computerchips und elektronischen Schaltungen verwendet wird, bewirkt dies beispielsweise eine Qualitätsverschlechterung bzw. eine Erhöhung des Ausschusses und ist somit unerwünscht.

Darüber hinaus wird bei vielen Materialien ein Teil der absorbierten Strahlung nicht nur in Wärme umgewandelt, sondern auch in Form von Fluoreszenz wieder abgegeben, die ebenfalls durch Verunreinigungen und Kristallstörungen erzeugt werden.

Es ist daher bereits versucht worden, die optische Qualität derartiger Materialien bereits in einem frühen Zeitpunkt vor ihrer Weiterverarbeitung zu optischen Elementen zu bestimmen. So beschreibt beispielsweise die WO 2004/027 395 ein Verfahren zur Bestimmung der Eignung eines optischen Materials für die Herstellung von optischen Elementen, bei dem eine strahlungsinduzierte Absorption im optischen Material dadurch ermittelt wird, dass es mit einer Anregungsstrahlung bestrahlt und die durch diese Bestrahlung induzierte aus intrinsischen und nichtintrinsischen Anteilen bestehende Gesamtfluoreszenz bestimmt wird, wobei der nichtintrinsische Anteil der Fluoreszenz während und/oder unmittelbar nach der Bestrahlung bestimmt wird.

In der DE 103 35 457.3 A1 wird ein Verfahren zur quantitativen Bestimmung der Eignung von Kristallen für optische Elemente bei hohen Energiedichten beschrieben, bei dem die Strahlungsabhängige Transmission bei Wellenlängen im UV durch die strahlungsinduzierte Fluoreszenz bestimmt wird, wobei mindestens ein induziertes Fluoreszenzmaximum von einem nichtlinearen Absorptionsprozess bei verschiedenen Fluenzen bestimmt und daraus die Steigung der Kurve die |dT/dH| ermittelt und aus dieser Steigung die Transmission bestimmt wird. Mit diesem Verfahren lässt sich der sog. sofort auftretende Strahlenschaden (Rapid Damage Prozess, RDP) feststellen.

In der DE 100 50 349 (A1) wird ebenfalls ein Verfahren zur Bestimmung der Strahlenbeständigkeit von Kristallen beschrieben. Dabei wird die Änderung des Absorptionskoeffizienten vor und nach Bestrahlung eines Kristalles ermittelt, indem in einer ersten Messung des Kristalles oder eines Spaltstückes davon über einen zuvor festgelegten Wellenbereich von λ₁ bis λ₂ mittels eines Spektrophotometers ein Absorptionsspektrum A bestimmt wird, dann der Kristall bzw. das Spaltstück mit einer energiereichen Strahlungsquelle unter Ausbildung sämtlicher theoretisch möglicher Farbzentren bestrahlt und in einer zweiten Messung des so bestrahlten Kristalles über den gleichen Wellenbereich λ₁ bis λ₂ ein Absorptionsspektrum B bestimmt wird. Anschließend wird das Flächenintegral des aus den Absorptionsspektren A und B gebildeten Differenzspektrums über den Bereich der Wellenlänge λ₁ bis λ₂ bildet und durch die Dicke D des Kristalles dividiert. Aus diesem Wert wird der beim späteren Gebrauch durch die Arbeitswellenlänge induzierte Absorptionskoeffizient Δk bestimmt.

Die EP 0 875 778 A1 beschreibt, dass bei einem bildfocussierende optischen System für UV-Laser die Absorption an CaF₂-Kristallen im Wesentlichen durch Verunreinigung mit Natrium hervorgerufen wird, die typischerweise im Bereich von 0,1 ppm liegt. Demnach sollen die anderen möglichen Verunreinigungen wie Strontium, etc. in einem wesentlich geringeren Umfang an der Erzeugung der nichtintrinsischen Absorption beitragen.

In der EP 0875 778 (A1) wird ein zu untersuchendes Material mit einem energiereichen ArF-Laser bei einer Frequenz von mehreren hundert Hz mehrere Sekunden oder Minuten bestrahlt und das Absorptionsspektrum vor oder nach Bestrahlung bestimmt. Die dabei pro Puls eingestrahlte Energie betrug 1 µJ bis zu mehreren Joule pro Puls bei einer Pulsdauer 10 bis 20 ns. Dabei wurde festgestellt, dass die beim Bestrahlen von Quarzglas und CaF₂ mit Laser erzeugte Absorption nicht mit derjenigen übereinstimmt, die mittels einem schwachen Lichtstrahl eines Spektrophotometers gemessen wird. Dabei wurde gefunden, dass die Durchlässigkeit bzw. Transmission des Materials zu Beginn der Bestrahlung bis zu ca. 10⁴ Pulsen relativ schnell abnimmt und danach konstant bleibt. Darüberhinaus wird ausdrücklich festgestellt, dass sich anschließend die Transmission nicht mehr verändert, weshalb diese nach 10⁴ bis 10⁵ Pulsen bestimmt wird.

Des weiteren beschreibt JP 2001 041 876 A ein Verfahren zur Bewertung der UV-Festigkeit von Flussspat. Danach wird Flussspat mittels eines Laserstrahls im UV-Bereich mit hoher Intensität bestrahlt und danach die Durchlässigkeit bei einer Wellenlänge zwischen 150 und 300 nm bestimmt. Mit einem solchen Verfahren wird jedoch lediglich der mit 104 bis 107 Pulsen kurzfristig erzeugte reversible Strahlenschaden bestimmt.

Auch die US 6,486,949 B2 beschreibt ein Verfahren zur Bestimmung der Qualität von optischem Material, bei dem zuerst ein Fluoreszenzspektrum des optischen Materials bestimmt wird, und dies mit einem Referenzspektrum verglichen wird, von dem bekannt ist, dass es die gewünschten Eigenschaften aufweist.

Mit all diesen Verfahren kann jedoch lediglich eine kurzzeitige reversible Strahlenschädigung bestimmt werden, die durch weitere Bestrahlung oder Wärmebehandlung reversibel ist, das heisst, dass diese Strahlenschäden wieder relaxieren. Bislang ist davon ausgegangen worden, dass die vom Quarzglas bekannten und z. B. nach Triebel et al. im "Optical Diagnostic Methods for Inorganic Materials II", S. 1, (Evaluation of Fused Silica for DUV Laser Applications by Short Time Diagnostics) Proceedings of SPIE Vol.4103 (2000) (0277-786X) bestimmten irreversiblen Strahlenschäden, die beim längeren Gebrauch solcher optischen Materialien über mehrere Jahre hinweg eine langsame und irreversible Zunahme der Absorption bewirken, in Kristallen nicht auftreten. Inzwischen wurde aber bei langandauernden Tests gefunden, dass bei einem Beschuss mit 10⁸-10⁹ Laserpulsen, d.h. über mehrere Wochen hinweg, und Energiedichten von 5-25 mJ/cm² pro Puls auch an Kristallen solche irreversiblen Dauerschäden entstehen können.

Zur Bestimmung dieses Dauerschadens wurde bislang so vorgegangen, dass an dem optischen Material die Transmission T und/oder die Absorption A pro eingestrahlter Energiedichte bzw. Fluenz H bestimmt und aus der Steigung dieser Kurve bzw. dem Betrag der Steigung |dT/dH| bzw. |dA/dH| bestimmt. Aus dieser Kurve lässt sich dann durch Extrapolation auf 0 der Betrag der absoluten Transmission bzw. der Initialabsorption bei einer eingestrahlten Energie H von 0 ermitteln. Dieser auf eine Probendicke normierte Wert wird als die Initialabsorption k₀ bezeichnet. Anschließend wird das optische Material mit hoher Energiedichte von ca. 1 Giga Puls mit 10-12 mJ/cm² bestrahlt und nach dieser Bestrahlung nochmals wie zuvor beschrieben die Initialabsorption bzw. absolute Transmission bestimmt. Die Differenz der jeweils ermittelten Initialabsorption k₀ (bzw. absoluten Transmission) vor und nach Bestrahlung ist ein zuverlässiger Wert für die Langzeitstabilität des optischen Materials, wobei sich Δk-Werte von >4x10⁻⁴ cm⁻¹ als unbrauchbar erwiesen haben.

Da die Standzeiten solcher Linsensysteme in Steppern oft 10 Jahre und darüber hinaus betragen sollen, ist es notwendig bereits mit Fertigstellung des Rohmaterials eine Aussage über die im Laufe der Zeit entstehenden nicht reversiblen Strahlenschäden zu treffen, und ungeeignetes Material auszusortieren. Damit können nicht nur erhebliche Kosten für die aufwändige Herstellung von optischen Linsensystemen, sondern auch Belichtungsfehler vermieden werden, wodurch sich die Ausbeute bei der Chipherstellung erhöht. Eine einfache, möglichst in wenigen Stunden durchführbare, Bestimmung dieser Langzeitstabilität war bislang nicht möglich und ist bislang nur über den zuvor beschriebenen mehrwöchigen Dauerbeschuss mit Laserenergie erfolgt.

Die Bestimmung dieser langfristigen Absorptionszunahme in einem Dauertest ist jedoch aus praktikablen Gründen nicht möglich und es wurde bislang keine Möglichkeit gefunden, mit der über eine kürzere Zeitspanne gewonnene Resultate eine Vorhersage über Änderungen der optischen Materialeigenschaften über den gesamten Einsatzzeitraum hinweg möglich ist.

Die Erfindung hat daher zum Ziel ein Verfahren bereit zu stellen mit dem die durch Strahlenschädigung hervorgerufene irreversible Absorptionsänderung eines optischen kristallinen Materials bei langem dauerndem Gebrauch, d.h. die Langzeitschädigung rasch und mit geringem Zeitaufwand bestimmt werden kann, um auf diese Weise geeignetes kristallines Material auszuwählen.

Dieses Ziel wird durch das in den Ansprüchen definierte Verfahren erreicht.

Es wurde nämlich gefunden, dass mittels einer Kombination von drei speziellen in Anspruch 1 definierten Testverfahren, die allesamt nur den kurzfristigen sofort auftretenden reversiblen Strahlenschaden anzeigen, sich überraschenderweise auch feststellen lässt, ob dieses Material auch bei einer Langzeitbelastung einen nicht reversiblen Strahlenschaden entwickelt und damit dessen Absorption beim lang andauernden Gebrauch irreversibel zunimmt. Dies ist um so überraschender als die hier angewendeten Testverfahren lediglich den schnellen, kurzfristig entstehenden und reversiblen Strahlenschaden, den sogenannten Rapid Damage Process (RDP) anzeigen, der auf völlig anderen Mechanismen beruht als dies beim irreversiblen Strahlenschaden der Fall ist, der erst bei langem Gebrauch auftritt. Nur wenn ein kristallines Material in allen drei Tests zuvor festgelegte Sollwerte erfüllt, ist sichergestellt, dass es auch bei einer Dauerbelastung mit energiereicher Strahlung keine starke bzw. schädliche irreversible Absorptionsänderung ausbildet. Die Reihenfolge in der diese drei Tests durchgeführt werden ist für die erfindungsgemäße Bestimmung ohne Bedeutung.

Im ersten Test wird die nicht-intrinsische Fluoreszenz bereits während der Anregung mit Licht ermittelt und/oder unmittelbar nach Beendigung eines Lichtimpulses, d. h. nachdem der Lichtimpuls die Probe durchlaufen hat.

In einer erfindungsgemäßen bevorzugten Ausführungsform wird neben der nicht-intrinsischen Fluoreszenz zur Normierung auch die intrinsische Fluoreszenz bestimmt. Da nämlich die intrinsische Fluoreszenz eine Materialkonstante darstellt, lässt sich aus dem Größenverhältnis von nicht-intrinsischer zu intrinsischer Fluoreszenz die nicht-intrinische Bande normieren und so rasch ermitteln, ob das getestete kristalline optische Material für die Weiterverarbeitung zu einem optischen Element wie beispielsweise einer Linse, Prismen etc. geeignet ist. Darüber hinaus kann aus diesem Verhältnis an Hand einer einfachen Eichkurve jederzeit die Menge der jeweiligen Verunreinigung ermittelt werden, ohne dass aufwändige Kalibrierungen, z. B. Dimensionsbestimmungen etc. an der zu untersuchenden Probe notwendig sind.

Zur Durchführung des erfindungsgemäßen Verfahrens wird die Fluoreszenz der Wellenlänge bei 740 nm bestimmt. Diese Fluoreszenzbande hat sich als besonders empfindlich im erfindungsgemäßen Verfahren erwiesen. Vorzugsweise wird eine intrinsische Fluoreszenzbande zur Normierung der nicht-intrinsischen Fluoreszenz verwendet. Zur Normierung besonders geeignet ist die intrinsische Fluoreszenzbande bei 278 nm. Die Normierung der Höhe der gemessenen nicht-intrinsischen Fluoreszenzbande oder -banden erfolgt durch Bildung des Verhältnisses von nicht-intrinsischer zu intrinsischer Fluoreszenz. Ganz besonders bevorzugt wird im erfindungsgemäßen Verfahren die nichtintrinsische Fluoreszenz synchron zum eingestrahlten Laserimpuls ermittelt. Ein Verhältnis von kleiner als 1:100, bevorzugt 1:200, am bevorzugtesten 1:500 zeigt an, dass dieses Material den ersten Test bestanden hat.

Es hat sich als besonders zweckmäßig erwiesen, vor Durchführung des erfindungsgemäßen Verfahrens das zu bestimmende kristalline Material mittels einer Vorbestrahlung zu behandeln. Dabei wird mit einer vorbestimmten Anzahl von Laserimpulsen der Absorptionszustand des Materials bezüglich der sog. rapid damage bzw. des sog. rapid annealing gesättigt, so dass die darauf folgenden Messungen jeweils von einem gleichmäßigen Grundniveau aus erfolgen. Übliche Pulsmengen betragen mindestens 3000, vorzugsweise mindestens 6000 und 30.000, vorzugsweise 70.000 - 200.000 Laserpulse. Prinzipiell ist es zur Durchführung des erfindungsgemäßen Verfahrens notwendig, dass jeweils mit möglichst vergleichbaren Energiedichten in das zu untersuchende Material eingestrahlt wird. Vorzugsweise wird das Verfahren auch nicht nur mit der gleichen oder vergleichbaren Energiedichte durchgeführt, sondern vorzugsweise auch bei gleichen Anregungs- und Fluoreszenz-Wellenlängen, um vergleichbare Werte insbesondere Spektren zu erhalten.

Schließlich ist aus dem Fluoreszenzspektrum die Art der Verunreinigungen auch noch bei Mengen im ppb-Bereich problemlos feststellbar. Aus dem Verhältnis von intrinsischer zu nicht-intrinsischer Fluoreszenz ist ebenfalls die Menge der Fluoreszenz erzeugenden Verunreinigung ermittelbar. Übliche verunreinigende Materialien sind Seltene Erden und insbesonders Cer, Europium, Terbium, Natrium und auch oxidischer Sauerstoff.

Erfindungsgemäß ist es bevorzugt, die Bestrahlung im ersten Test mit UV-Licht und insbesondere tiefem UV-Licht durchzuführen. Dabei haben sich Wellenlängen unterhalb 250 nm, insbesonders unterhalb 200 nm als zweckmäßig erwiesen, wobei Wellenlängen zwischen 100 bzw. 150 nm und 200 nm besonders bevorzugt sind. Zweckmäßigerweise wird das Verfahren mit derjenigen Anregungswellenlänge durchgeführt, mit der das kristalline optische Material beim späteren Gebrauch durchstrahlt werden soll. Eine bevorzugte Strahlungsquelle für das energiereiche Licht ist ein Laser, wobei Laserimpulse mit Arbeitswellenlängen von 193 nm bevorzugt sind.

Im erfindungsgemäßen Verfahren wird die nicht-intrinsische Fluoreszenz vorzugsweise mittels einem Gitterspektrograph und einer I-CCD-Kamera mit einstellbaren Belichtungsintervalen (Intensified charged coupled device) gemessen, wobei es bevorzugt ist das dabei erhaltene Spektrum rechnergesteuert zu verarbeiten. Derartige Messungen und Vorrichtungen sind dem Fachmann bekannt und beispielsweise von W. Triebel et al. in Proceedings SPIE Vol. 4103, S. 1-11, 2000, "Evaluation of Fused Silica for DUV Laser Applications by Short Time Diagnostics") oder auch von Mizuguchi et al. in J. Opt. Soc. Am. B, Vol. 16 1153 ff. (Juli 1999) beschrieben.

Erfindungsgemäß ist es besonders bevorzugt, zwischen der zu untersuchenden, fluoreszierenden Probe und der Fluoreszenz-Meßeinrichtung eine Sperreinrichtung anzuordnen, welche den Durchtritt der üblicherweise energiereichen Anregungsstrahlung verhindert. Derartige Sperreinrichtungen, die beliebige Anregungswellenlängen ausblenden sind dem Fachmann bekannt. Die Ausblendung kann dabei auf vielfältige Art und Weise erfolgen. Eine Möglichkeit ist beispielsweise die Ausblendung dieser Wellenlängen mittels einem vor der CCD-Kamera angeordneten Gitterspektrographen, welcher das aufgenommene Licht in seine verschiedenen Wellenlängen aufteilt. Durch entsprechende Anordnung bzw. Drehung des Spektrographen ist es möglich, die von einer energiereichen Strahlungsquelle ausgesonderte Anregungsstrahlung abzublocken oder abzulenken. Prinzipiell ist es auch möglich, den Gitterspektrographen der CCD-Kamera selbst zu drehen.

Eine weitere Möglichkeit besteht in der Verwendung von wellenlängenspezifischen Filtern wie z. B. dielektrischen Dünnschichtfiltern, die heute ebenfalls selektiv für beliebige Wellenlängen herstellbar sind. Derartige Filter werden üblicherweise dadurch hergestellt, dass auf ein Trägermaterial eine entsprechende mehrschichtige Spiegelschicht aufgetragen wird, welche den Durchtritt der unerwünschten Wellenlängen verhindert.

Solche Schichtenfilter sind im erfindungsgemäßen Verfahren bevorzugt. Es ist jedoch notwendig, dass die verwendeten Filter keine durch das auftreffende Licht erzeugte Eigenfluoreszenz aufweisen, damit die Meßergebnisse nicht verfälscht werden.

Die erfindungsgemäße Bestimmung der Fluoreszenz erfolgt insbesonders innerhalb bzw. unmittelbar nach einem Belichtungsintervall am Material. Sie erfolgt vorzugsweise innerhalb eines Zeitabschnitts nach Ende der Materialbelichtung, der den jeweiligen charakteristischen Abklingkurven bzw. Lebensdauern der verschiedenen nicht-intrinisischen Fluoreszenzen entspricht bzw. daran angepasst ist. In einer Vielzahl von Fällen haben sich 90%, insbesonders 80%, oft auch 70% der Abklingzeit zur Messung als zweckmässig erwiesen. Bei einigen, bevorzugten optischen Materialien wird das erfindungsgemäße Verfahren bzw. die Bestimmung innerhalb eines Zeitraumes bzw. Zeitabschnittes von weniger als 50 nsec. nach Beendigung der Bestrahlung bzw. des Bestrahlungsimpulses im Material durchgeführt, wobei die Bestimmungen bis zu max. 40 vorzugsweise bis zu max. 30 nsec. besonders bevorzugt sind. In einigen Fällen haben sich sogar Messungen innerhalb einer Zeit von weniger als 15 nsec als zweckmäßig erwiesen, nachdem der Strahlungsimpuls das Material durchlaufen hat.

Von den im erfindungsgemäßen Verfahren verwendeten CCD-Kameras sind sogenannte OMAs (Optical Multichannel Analyzer bzw. intensivierte optische Vielkanalanalysatoren) insbesonders mit einstellbaren Belichtungs- bzw. Messintervallen bevorzugt. Eine derartige Kamera weist eine Nachweisgrenze von weniger als 10 Photonen auf und ermöglicht so geringe Belichtungszeiten wie beispielsweise 10 nsec. bzw. sogar bis zu 150 psec. Derartige Kameras sind unter anderem beispielsweise von Roper Scientific, USA kommerziell erhältlich.

Der zweite Test wird derart durchgeführt, dass das zu untersuchende Material mit einer hohen Energiedichte von zweckmäßigerweise mindestens 1 mJ, vorzugsweise mindestens 5 mJ/cm² belastet wird. Bevorzugte minimale Energiedichten betragen 25 mJ/cm² und insbesondere 50 mJ/cm². Prinzipiell ist die Energiedichte nach oben nicht begrenzt, jedoch haben sich maximale Energiedichten von 200 mJ/cm², insbesondere 150 mJ/cm² als zweckmäßig erwiesen, wobei maximale Energiedichten von 120 mJ/cm², insbesondere 100 mJ/cm² besonders bevorzugt sind. Die Bestrahlung wird vorzugsweise mit einem Laser durchgeführt. Ein zweckmäßiger Laser ist ein Laser mit der Wellenlänge 193 nm, z. B. ein ArF-Laser. Die Energiebestrahlung wird zweckmäßigerweise mit einer Menge von mindestens 10⁴ vorzugsweise mindestens 2x10⁴ und insbesondere mindestens 3x10⁴ Pulsen durchgeführt, wobei eine Mindestanzahl von 4x10⁴ bzw. 5x10⁴ besonders bevorzugt ist. Auch hier ist wieder eine Obergrenze erfindungsgemäß nicht relevant, jedoch haben sich aus Praktikabilitätsgründen eine Obergrenze von 20x10⁴, insbesondere 15x10⁴ bzw. 10x20⁴ als zweckmäßig erwiesen. Anschließend wird im bestrahlten Fleck das Absorptionsspektrum aufgenommen und die Differenz des Absorptionsspektrums vor Bestrahlung und nach Bestrahlung bestimmt. Hierbei hat es sich auch gezeigt, dass die Aufnahme des Absorptionsspektrums mit möglichst geringen Energien durchgeführt werden muss, damit der erzeugte schnelle Strahlenschaden, Rapid Damage Process, nicht wieder relaxiert. Überschreitet der Wert der Differenz der beiden Absorptionsspektren einen vorgegebenen Sollwert, dann weist das untersuchte Material nicht die erforderliche Langzeitstabilität auf.

Das Absorptionsspektrum wird vorzugsweise im ultravioletten und sichtbaren Bereich, das heißt in einem Bereich zwischen 190 nm und 800 nm aufgenommen. Selbstverständlich ist es erfindungsgemäß auch möglich lediglich ein oder mehrere Zwischenintervalle in diesem Bereich zu untersuchen, oder auch nur einzelne Banden. Ganz besonders bevorzugt wird erfindungsgemäß die Absorptionsbande bei 380 nm zur Qualitätskontrolle verwendet. Zur Erreichung der notwendigen Langzeitstabilität der Absorption sollte die Änderung der Absorption bei dieser Bande zumindest kleiner 2,5 bzw. 2·10⁻³ cm⁻¹, vorzugsweise < 1·10⁻³ cm⁻¹ und insbesonders < 0,5·10⁻³ cm⁻¹ betragen.

Im dritten Test zur erfindungsgemäßen Bestimmung, ob ein zu untersuchendes Material überhaupt die geforderte Langzeitstabilität bezüglich der Transmission für die Verwendung in der Photolithographie zeigt, wird derart vorgegangen, dass man die Absorption bei einer Wellenlänge im Peak bei 265 nm bestimmt; dann das optische Material vorzugsweise mit einer kurzwelligen, energiereichen Strahlung anregt und zwar vorzugsweise so lange, bis sich sämtliche bzw. annähernd sämtliche theoretisch möglichen Farbzentren ausgebildet haben und danach bei der gleichen Wellenlänge vor der Bestrahlung erneut die Absorption ermittelt. Es hat sich nun gezeigt, dass eine Langzeitstabilität dann erhältlich ist, wenn die Differenz der Absorption kleiner als 50·10⁻³ cm⁻¹ beträgt, wobei Differenzen kleiner 30, insbesonders 20·10⁻³ cm⁻¹ bevorzugt sind. Besonders bevorzugt sind < 10·10⁻³ und insbesonders < 5 bzw. < 3·10⁻³ cm⁻¹ vor der Bestrahlung und nach der Bestrahlung.

Dabei werden die Strahlenschäden im herkömmlichen Verfahren vorzugsweise mit derjenigen Wellenlänge erzeugt, welche auch in der späteren Optik angewendet werden soll. Geeignete Strahlenquellen zur Durchführung der erfindungsgemäß induzierten Absorption sind Röntgenstrahlen sowie andere energiereiche Strahlen, wie beispielsweise radioaktive Strahlung, z.B. Co⁵⁰. Wegen ihrer billigen und einfachen Handhabung sowie ihrer leichten Verfügbarkeit sind erfindungsgemäß jedoch Röntgenstrahlen besonders bevorzugt.

Die zur Durchführung des erfindungsgemäßen Verfahrens notwendige Energiedichte ist über weite Bereiche variabel und hängt lediglich davon ab in welchem Zeitraum die Sättigung erreicht werden soll. Üblicherweise werden jedoch Energiedichten von 10³ - 10⁵ Gy, vorzugsweise 5 x 10³ - 5 x 10⁴ Gy (1Gy = 1J/kg) verwendet. Dies entspricht bei den unten beschriebenen Bestrahlbedingungen Dosen von einigen 10 J/cm². Im Vergleich zu Test 2 ist dabei zu berücksichtigen, dass bei einer Bestrahlung mit einem 193nm-Laser deutlich über 90% der Energie nicht absorbiert wird, während mit Röntgenstrahlung ein größerer Prozentsatz an eingestrahlter Energie im Material deponiert werden kann. Die Bestrahlungszeit beträgt hierbei üblicherweise 10 - 360 Minuten, vorzugsweise 30 - 180 Minuten bis zur Sättigung. Zur Kontrolle der Sättigung kann erfindungsgemäß eine zweite Bestrahlung an der Probe durchgeführt werden und die Intensität der Absorptionsbanden bzw. des Absorptionsspektrums miteinander verglichen werden. Sind dabei keine Änderungen der Intensitäten mehr zu finden, wurde mit der Bestrahlung die gewünschte Sättigung erreicht.

Um zu gewährleisten, dass wirklich alle Farbzentren im optischen Material angeregt werden, sollte die Dicke der bestrahlten Probe bzw. der Spaltstücke nicht zu groß sein, da bei größeren Dicken je nach Strahlenbeständigkeit der Probe nicht gewährleistet ist, dass eine homogene Durchdringung des gesamten Materials stattfindet und womöglich der größte Teil der einfallenden Strahlung bereits im ersten Teil der durchstrahlten Dicke absorbiert wird. Dies würde zu einer unterschiedlichen Ausbildung von Farbzentren in Abstand von der Probenoberfläche führen, durch welche der Strahl in die Probe eintritt.

Dabei ist zu beachten, dass jeweils Bestrahlungsbedingungen ausgewählt werden, bei denen alle Farbzentren angeregt bzw. ausgebildet werden können. Wird nun das Spektrum vor der Bestrahlung mit dem Spektrum nach der Bestrahlung verglichen, so gibt deren Differenz direkt den Sättigungszustand wieder und zeigt im ausgewählten Wellenbereich die Absorption mit maximaler Intensität, die bei der Bestrahlung mit Wellenlängen unterhalb der späteren Arbeitswellenlänge erzeugt werden können.

Ein großer Vorteil dieser Tests liegt darin, dass die Spaltstücke weder poliert noch deren Dicke genau eingestellt werden muss. Es können somit beliebige Spaltstücke verwendet werden. Da Kristalle üblicherweise entlang ihrer Kristallachsen brechen, sind immer parallel verlaufende Oberflächen vorhanden, welche für die Messung des Absorptionsspektrums im Spektrophotometer zur Verfügung stehen. Der Abstand der Oberfläche voneinander, d. h. die Dicke des Kristalls bzw. die Weglänge des Lichtes im Kristall kann bequem mittels einer Schublehre oder einer Mikrometerschraube bestimmt werden. Zur Bestimmung der Absorption bzw. des Strahlenschadens steht der den Kristall durchdringender Lichtstrahl des Spektrophotometers vorzugsweise senkrecht zur Kristalloberfläche.

Die Differenzbildung der Absorptionsmessungen vor und nach der Bestrahlung ergibt ein Differenzspektrum, mit dem die Strahlenbeständigkeit des Kristalls bestimmt wird. Über die bekannte durchstrahlte Dicke des Spaltstückes kann gemäß dem Lambert-Beerschen Gesetz ohne weiteres der maximale Absorptionskoeffizient Δk [1/cm] berechnet werden.
Bevorzugte Arbeitswellenlängen sind diejenigen von Lasern, insbesondere von Excimer-Lasern, wie ArF-Excimer-Lasern also 193 nm.

Für das erfindungsgemäße Verfahren geeignete optische Materialien sind Kristallmaterialien, wobei von den Kristallmaterialien Alkali- und Erdalkalihalogenide, insbesondere deren Fluoride bevorzugt sind. Ganz bevorzugt sind CaF₂, BaF₂, MgF₂, SrF₂ sowie LiF, KF und NaF. Besonders bevorzugt ist auch ein Mischkristall der Form KMgF₃. Prinzipiell sind jedoch auch andere für diesen Zweck bekannte Mischkristalle geeignet, die durch Dotierung dieser Basiskristalle mit anderen geeigneten Dotierungsmitteln gebildet werden. Ebenso geeignet sind kubische Perovskite, kubische Granate, kubische Spinelle, sowie kubische M(II)- sowie M(IV)-Oxide. Beispiele für die kubische Granate sind Y₃Al₅O₁₂, Lu₃Al₅O₁₂, Ca₃Al₂Si₃O₁₂, K₂NaAlF₆, K₂NaScF₆, K₂LiAlF₆ und/oder Na₃Al₂Li3F₁₂. Beispiele für kubische Spinelle sind MgAl₂O₄, (Mg,Zn)Al₂O₄, CaAl₂O₄, CaB₂O₄ und/oder LiAl₅O₈. Beispiele für kubische Perovskite sind BaZrO₃ und/oder CaCeO₃ und Beispiele für kubische II/IV-Oxide sind MgO und/oder (Mg,Zn)O.

Die Erfindung betrifft auch mit diesem Verfahren erhaltene kristalline optische Materialien, und deren Verwendung in optischen Abbildungssystemen, sowie zur Herstellung von Steppern, Lasern, insbesondere von Excimer-Lasern, Computerchips, sowie integrierten Schaltungen und elektronischen Geräten, die solche Schaltungen und Chips enthalten.

Die Erfindung soll anhand der folgenden Beispiele näher erläutert werden.

### Beispiel 1

An 6 Kristallproben aus verschiedenen Züchtungen mit einer Länge von jeweils 10 mm wurde die Änderung der Initialabsorption bei 0 Energie (Δk₀) bei 193 nm bestimmt. Dabei wurde die Transmission der jeweiligen Probe bei verschiedenen Energiedichten gemessen und die aus diesen Werten errechnete Absorption auf die Energiedichte 0 mJ/cm² extrapoliert. Anschließend wurden sie mit einem ArF-Laser der Arbeitswelle 193 nm mit ca. 1 Gigapuls und 10 bis 12 mJ/cm² bestrahlt. Nach erfolgter Bestrahlung wurde für beide Kristallproben nach der gleichen Methode die Initialabsorption nochmals bestimmt. Die Änderung wird als Δk₀ angegeben.

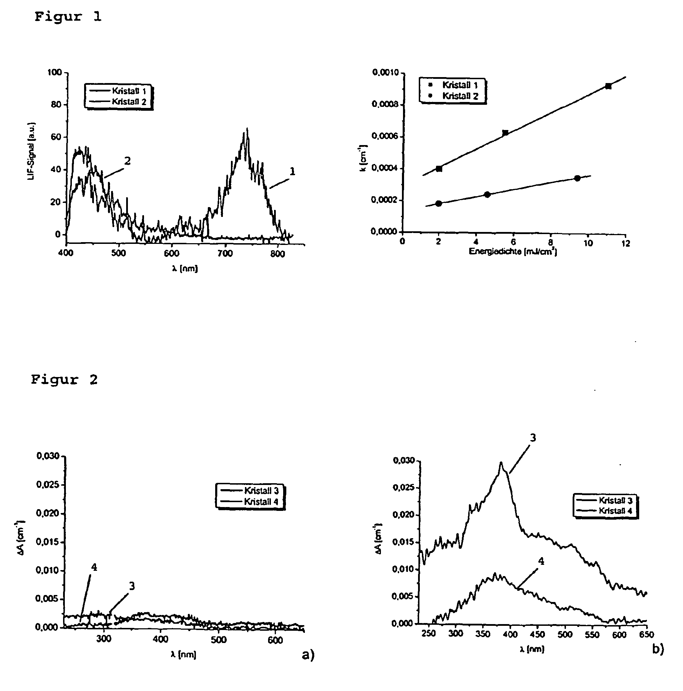

Vor der Bestrahlung wurde an den Kristallen 1 und 2 analog gemäß dem Test analog dem in der WO 2004/027 395 beschriebenen Verfahren die nichtintrinsische Fluoreszenz bei 740 nm bestimmt. Die Ergebnisse sind in der beiliegenden Tabelle 1 angegeben. Hierbei zeigte sich, dass der Kristall 1 eine hohe Fluoreszenzbande bei 740 nm zeigt, wohingegen in Kristall 2 an dieser Stelle keinerlei Fluoreszenz zu sehen ist. Die Ergebnisse sind in Figur 1 dargestellt.

**Tabelle 1**

| | vor Bestrahlung | Änderung durch Bestrahlung |
|---|---|---|
| | k₀ [10⁻⁴ cm⁻¹] | Δk₀ [10⁻⁴ cm⁻¹] |
| Kristall 1 | 2,5 | 4,5 |
| Kristall 2 | 1,2 | 0,6 |

Hieraus ist auch ersichtlich, dass vor der Bestrahlung beide Kristalle eine vergleichbare Initialabsorption aufwiesen. Kristall 1 jedoch, auch eine hohe Fluoreszenzbande bei 740 nm aufweist und dann Test 1 nicht erfüllt. Nach Bestrahlung zeigt Kristall 1 eine Änderung der Initialabsorption von 4,5 x 10⁻⁴ cm⁻¹, wohingegen die Änderung der Initialabsorption bei Kristall 2, der im Test 2 keinerlei Fluoreszenzbande zeigt, nur 0,6 beträgt. Dies bedeutet, dass ein aus Kristall 1 gewonnenes Material für Lithographieanwendungen nicht verwendbar ist, da dies nicht nur bei kurzzeitigem Gebrauch eine schlechte Fluoreszenzbande zeigt, sondern auch bei lang andauerndem Gebrauch eine starke Zunahme der Langzeitschäden und damit eine Erhöhung der Absorption.

### Beispiel 2: Messung und Änderung der spektralen Eigenschaften, Hochenergiebestrahlung (Test 2) nach Röntgenbestrahlung (XRD) (Test 3)

a. die hier beschriebene Vorgehensweise wird auf Kristalle angewendet, die bei der LIF-Bewertung (Test 1) als geeignet angesehen werden, d.h. die im Test 1 keine Emissionsbande bei 740 nm zeigt. Dabei wurden die Kristalle 3 und 4 vor der Bestrahlung zur Bestimmung von Δk₀ sowohl mit dem Testverfahren 2, als auch mit dem Verfahren 3 untersucht. Die Ergebnisse sind in den Figuren 2a und 2b dargestellt. Wie sich der Figur 2a entnehmen lässt, zeigen beide Kristalle 3 und 4 bei dem Verfahren nach dem Test 2 durchaus ein vergleichbare, jedoch bei dem Verfahren des Test 3 deutliche Unterschiede im Differenzspektrum.
Danach wurde für beide Kristalle die Änderung der Initialabsorption vor und nach der erfindungsgemäßen Bestrahlung bestimmt. Die Ergebnisse hierbei sind in Tabelle 2 angegeben. Die Initialabsorption und die Absorptionsänderung wurde nach Langzeitbestrahlung von 10⁹ Laserpulsen mit 10 mJ/cm² normiert.

**Tabelle 2**

| | vor Bestrahlung | Änderung durch Bestrahlung |
|---|---|---|
| | k₀ [10⁻⁴ cm⁻¹] | Δk₀ [10⁻⁴ cm⁻¹] |
| Kristall 4 | 1.4 | 4 |
| Kristall 3 | 1.1 | 10 |

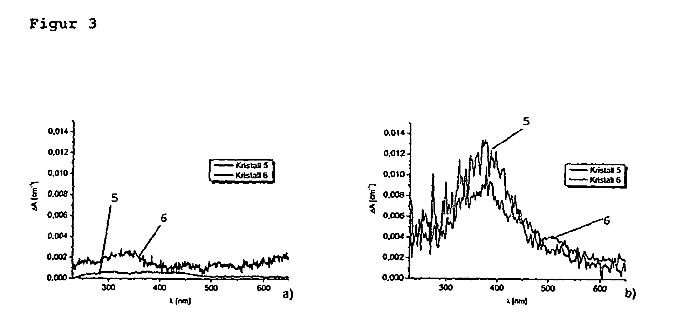

b) Es hat sich jedoch auch gezeigt, dass die Bestimmung des XRD-Werts gemäß Test 3 alleine nicht zur Bestimmung der Langzeitlaserfestigkeit ausreicht. Hierzu wurden an den Kristallen 5 und 6 der HE-Test 2 (Figur 3a) und die Röntgenbestrahlung XRD (Test 3)(Figur 3b) durchgeführt. Dabei zeigt sich, dass die mit dem HE-Test 2 durchgeführte Bewertung schlechtere Eigenschaften für den Kristall 6 anzeigt, wobei der XRD-Test 3 nur eine geringfügig schlechtere Qualität dieses Kristalls angibt. Die Ausbildung des Differenzspektrums für diese Kristalle ist in Tabelle 3 dargestellt.

**Tabelle 3**

| | vor Bestrahlung | Änderung durch Bestrahlung |
|---|---|---|
| | k₀ [10⁻⁴ cm⁻¹] | Δk₀ [10⁻⁴ cm⁻¹] |
| Kristall 6 | 4.5 | 4.5 |
| Kristall 5 | 0.8 | 2.4 |

Hier zeigt sich, dass der Kristall 6 bei einer Langzeitbestrahlung eine deutlich stärkere Absorptionsänderung Δk₀ zeigt, als dies bei Kristall 5 der Fall ist.

Dies belegt, dass mittels dem erfindungsgemäßen Verfahren andere strahlungsinduzierte Schädigungen des optischen Materials erfasst werden können als mit den bisherigen Verfahren und zwar solche, die über eine längere Gebrauchsdauer von beispielsweise zehn Jahren und mehreren hundert Milliarden Laserbeschüssen erzeugt werden. Das erfindungsgemäße Verfahren lässt sich mit allen 3 Tests über eine Zeit von weniger als einem Tag durchführen.

## Patentansprüche

1. Verfahren zur Bestimmung von für optische Zwecke geeigneten Kristallen mit geringer Neigung zu irreversiblen Strahlenschäden, die auch bei einer Langzeitbestrahlung mit UV bei hohen Energiedichten keine schädlichen irreversiblen Absorptionsänderungen ausbilden, **dadurch gekennzeichnet, dass** man die irreversiblen Strahlenschäden bestimmt, indem man in folgenden Tests
1. den Kristall bei 193 nm bestrahlt und die nicht intrinsische Fluoreszenz bei 740 nm bestimmt;
2. den Kristall mit Laserlicht einer hohen Energiedichte bestrahlt und die Absorptionsänderung bei einer Wellenlänge von 385 nm vor und nach der Bestrahlung bestimmt;
3. den Kristall mit einer energiereichen Strahlungsquelle unter Ausbildung sämtlicher Farbzentren bestrahlt und die Differenz des Flächenintegrals des Absorptionsspektrums im UV- und/oder sichtbaren Bereich vor und nach der Bestrahlung bestimmt und
4. Kristalle auswählt, welche vorgegebene Sollwerte für die nichtintrinsische Fluoreszenz, die Absorptionsänderunge und die Differenz des Flächenintegrals erfüllen.

2. Verfahren nach Anspruch 1 **dadurch gekennzeichnet, dass** der Kristall in Test 2 mit Laserlicht einer Energiedichte von 25-150 mJ/cm² und/oder 3-20x10⁴ Pulsen bestrahlt wird.

3. Verfahren nach einem der vorhergehenden Ansprüche **dadurch gekennzeichnet, dass** in Test 3 die Änderung des Flächenintegrals des Absorptionsspektrums zwischen 240 nm und 300 nm bestimmt wird.

4. Verfahren nach einem der vorhergehenden Ansprüche **dadurch gekennzeichnet, dass** im Test 3 die Absorptionsänderung bei 265 nm vor und nach der Bestrahlung bestimmt wird.

5. Verfahren nach einem der vorhergehenden Ansprüche **dadurch gekennzeichnet, dass** der optische Kristall ein Alkalihalogenid, Erdalkalihalogenid oder ein Mischkristall davon ist.

6. Verfahren nach einem der Ansprüche 1-5, **dadurch gekennzeichnet, dass** der Kristall zur Herstellung von Linsen, Prismen, Lichtleitstäben, optischen Fenstern, optischen Komponenten für die DUV-Photolithographie, Steppern, Excimerlasern, Wafern, Computerchips, sowie integrierten Schaltungen und elektronischen Geräten, die solche Schaltungen und Chips enthalten, verwendet wird.

## Claims

1. Method of determining crystals which are suitable for optical purposes with a low tendency for irreversible radiation damages, which crystals do not form damaging irreversible absorption changes even with long-term radiation with UV at high energy densities, **characterized in that** the irreversible radiation damages are determined by carrying out the following tests:
1. irradiating the crystal at 193 nm and determining the non-intrinsic fluorescence at 740 nm;
2. irradiating the crystal with laser light of high energy density and determining the absorption change at a wavelength of 385 nm before and after the irradiation;
3. irradiating the crystal with a high-energy radiation source while forming all the colour centres and determining the difference of the area integral of the absorption spectrum in the UV and/or visible range before and after the irradiation; and
4. choosing crystals which have predetermined values for the non-intrinsic fluorescence, the absorption change and the difference of the area integral.

2. Method according to Claim 1, **characterized in that** the crystal in test 2 is irradiated with laser light of an energy density of 25-150 mJ/cm² and/or 3-20x10⁴ pulses.

3. Method according to one of the preceding claims, **characterized in that** in test 3 the change of the area integral of the absorption spectrum between 240 nm and 300 nm is determined.

4. Method according to one of the preceding claims, **characterized in that** in test 3 the absorption change at 265 nm is determined before and after the irradiation.

5. Method according to one of the preceding claims, **characterized in that** the optical crystal is an alkali halide, alkaline earth halide or a mixed crystal thereof.

6. Method according to one of Claims 1-5, **characterized in that** the crystal is used for the production of lenses, prisms, light-guide rods, optical windows, optical components for the DUV photolithography, steppers, excimer lasers, wafers, computer chips, and integrated circuits and electronic devices containing such circuits and chips.

## Revendications

1. Procédé pour détecter des cristaux convenant à des utilisations optiques ayant une propension faible aux dommages irréversibles causés par un rayonnement, qui ne développent pas de modifications de l'absorption irréversibles nocives même lors d'une irradiation de longue durée par des UV de haute densité énergétique, **caractérisé en ce qu'**on détecte les dommages irréversibles causés par un rayonnement au moyen des tests suivants :
1. on irradie le cristal à 193 nm et on détecte la fluorescence non intrinsèque à 740 nm ;
2. on irradie le cristal au moyen d'une lumière laser de haute densité énergétique et on détecte la modification de l'absorption à une longueur d'onde de 385 nm avant et après l'irradiation ;
3. on irradie le cristal au moyen d'une source de rayonnement de haute énergie formant l'ensemble des centres de couleur et on détecte la différence de l'intégrale sur la surface du spectre d'absorption dans le domaine UV et/ou visible avant et après l'irradiation et
4. on sélectionne les cristaux qui satisfont aux valeurs de consigne prédéfinies de la fluorescence non intrinsèque, de la modification de l'absorption et de la différence de l'intégrale sur la surface.

2. Procédé selon la revendication 1, **caractérisé en ce que** le cristal est irradié dans le test 2 par de la lumière laser de densité énergétique 25-150 mJ/cm² et/ou 3-20x10⁴ impulsions.

3. Procédé selon une des revendications précédentes, **caractérisé en ce qu'**on détecte dans le test 3 la modification de l'intégrale sur la surface du spectre d'absorption entre 240 nm et 300 nm.

4. Procédé selon une des revendications précédentes, **caractérisé en ce qu'**on détecte dans le test 3 la modification de l'absorption à 265 nm avant et après l'irradiation.

5. Procédé selon une des revendications précédentes, **caractérisé en ce que** le cristal optique est un cristal d'halogénure alcalin, d'halogénure alcalinoterreux ou un mélange des deux.

6. Procédé selon une des revendications 1-5, **caractérisé en ce que** le cristal est utilisé pour la fabrication de lentilles, de prismes, de barres conductrices de lumière, de fenêtres optiques, de composants optiques pour la photolithographie DUV, de photorépéteurs, de lasers excimères, de tranches, de puces pour ordinateur ainsi que de circuits intégrés et de dispositifs électroniques contenant de tels circuits et de telles puces.
